# NOUVEAU FASCICULE DE BREVET EUROPEEN

(11) **EP 1 451 383 B2**
(45) Date de publication et mention de la décision concernant l'opposition: **04.08.2010**
(45) Mention de la délivrance du brevet: 13.06.2007
(21) Numéro de dépôt: 02769796.0
(22) Date de dépôt: 25.10.2002
(51) Int. Cl.: C23C 2/26, C23C 24/08, C23C 2/04

(54) **PROCEDE DE REVETEMENT DE SURFACE METALLIQUE**
VERFAHREN ZUM BESCHICHTEN EINER METALLOBERFLÄCHE
METHOD FOR COATING A METAL SURFACE

(30) Priorité: 04.12.2001 BE 200100787
(43) Date de publication de la demande: 01.09.2004
(73) Titulaire: CENTRE DE RECHERCHES METALLURGIQUES asbl - CENTRUM VOOR RESEARCH IN DE METALLURGIE vzw, B-1200 BRUXELLES (BE)
(72) Inventeur: LE CRAZ, Sébastien, B-4000 Liège (BE)
(74) Mandataire: pronovem
(86) Numéro de dépôt international: PCT/BE2002/000162
(87) Numéro de publication internationale: WO 2003/048403

(56) Documents cités:
- WO- -98//39498
- WO-A-00/68460
- DE-A- 4 322 465
- DE-A- 19 942 025
- US-A- 3 379 557
- US-A- 4 818 568
- US-A- 5 853 850
- PATENT ABSTRACTS OF JAPAN vol. 013, no. 187 (C-592), 2 mai 1989 (1989-05-02) & JP 01 011983 A (NISSHIN STEEL CO LTD), 17 janvier 1989 (1989-01-17)
- PATENT ABSTRACTS OF JAPAN vol. 013, no. 134 (C-581), 4 avril 1989 (1989-04-04) & JP 63 297576 A (NISSHIN STEEL CO LTD), 5 décembre 1988 (1988-12-05)
- 'RÖMPP CHEMIE LEXIKON', GEORG THIEME VERLAG article 'p. 4199 and 2299'
- DATABASE WIKIPEDIA 'Siliciumdioxid'
- DATABASE WIKIPEDIA 'Aluminiumoxid'
- H.BÖTTCHER: 'Funktionelle Beschichtungen auf Basis anorganischer Nanosole' MATERIALWISSENSCHAFT UND WERKSTOFFTECHNIK vol. 32, no. 10, 2001, pages 759 - 766
- 'Produktinformation LUDOX',
- L.A.CASTLEBURY ET AL.: 'A technique for the extraction and purification of viable plasmodiophora brassicae resting spores from host root tissue' MYCOLOGIA vol. 86, 22 Février 1994, pages 458 - 460
- TAGUNGSPROTOKOLL EUROCCOR 30 Septembre 2001 - 04 Octobre 2001, RIVA DEL GARDA/ITALIEN,
- "NISSAN CHEMICAL" PRODUKTINFORMATION SNOWTEX NISSAN
- 'Lehrbuch der Anorganischen Chemie', HOLLEMAN-WIBERG article N.WIBERG, page 880

## Description

### Objet de l'invention

La présente invention se rapporte à un procédé pour revêtir en continu un substrat en mouvement, plus particulièrement une bande métallique en acier revêtu ou galvanisé, au moyen d'une couche protectrice ultra-fine constituée de nanoparticules d'oxyde, de préférence de silicium, titane.

### Arrière-plan technologique

On connaît bien l'effet bénéfique de différents métaux, comme le zinc ou l'aluminium, pour la protection des bandes d'acier contre la corrosion. De nombreux procédés permettent de réaliser en continu le dépôt 0d'une couche de zinc ou d'aluminium sur une bande défilant dans un bain contenant l'un ou l'autre de ces métaux ou un de leurs alliages à l'état fondu. Ces dépôts obtenus au trempé ont généralement une épaisseur de 5 à 25 microns.

On réalise des dépôts plus minces, au plus de quelques microns, par électrodéposition ou parfois à partir d'une phase vapeur du métal de protection.

### Premier enjeu : revêtement sans chromate

Après la protection anticorrosion constituée par la couche de zinc ou autre métal sacrificiel décrit ci-dessus, il faut encore réaliser une couche qui à la fois facilite l'accrochage d'un éventuel revêtement ultérieur et en outre protège la surface du métal revêtu contre des variations d'aspect en cours de stockage. Plusieurs types de revêtements sont connus. Parmi ceux-ci figurent la phosphatation au zinc, le traitement alcalin, la silanation, la chromatation, etc. Le choix d'un traitement donné dépend du type d'utilisation à laquelle le produit est destiné.

A l'heure actuelle, les meilleures tenues à la corrosion sont obtenues avec des procédés comprenant au moins un rinçage chromique. Malheureusement, le chrome hexavalent qui est utilisé pour effectuer ces traitements est une substance très toxique et dont l'utilisation est de plus en plus réglementée. En raison de cet état de fait, on observe une demande croissante pour des aciers revêtus sans chrome hexavalent.

### Second enjeu : le coil-coating en fin de ligne de galvanisation

Une des techniques permettant d'appliquer sous-couche et peinture de manière spécialement efficace est le "coil-coating", c'est-à-dire le dépôt d'un revêtement organique en continu sur bande défilante et rembobinée en fin de ligne. Aujourd'hui cependant, le procédé d'application de peinture est le plus souvent dissocié de celui de la galvanisation. Cette situation s'explique par la grande difficulté à appliquer de la peinture sur des lignes aussi rapides que celles de la galvanisation. Ainsi donc les dépôts de peinture sont soit effectués chez l'acheteur des tôles, soit appliqués sur des lignes dédiées exclusivement au pré-traitement et à la peinture.

D'énormes efforts conjoints de la part des sidérurgistes et des fabricants de peintures visent à simplifier les procédés de dépôt des peintures pour les rendre applicables à grande vitesse. L'objectif est de pouvoir appliquer revêtement métallique, tel que zinc ou autre, et peinture dans une même ligne. Les intérêts d'un tel couplage sont multiples. Premièrement, on élimine l'utilisation d'huile pour la protection anticorrosion de la bande le temps de son stockage et/ou transport. Enfin, on limite le nombre d'installations et en particulier les importants investissements et les frais de maintenance liés aux systèmes de débobinage et de rembobinage.

### Des réponses prometteuses: oxyde de silicium, titane, zirconium, aluminium, cérium ou antimoine

Si on examine la façon de réaliser la couche de protection des surfaces métalliques revêtues ou non, les oxydes de silicium, titane, zirconium, aluminium, cérium ou antimoine sont des composés très prometteurs. Ils sont tout d'abord insensibles aux oxydants. Ce sont également des isolants électriques, de surcroît relativement inertes chimiquement. Ainsi, une couche ultra-fine et dense de ce type d'oxydes pourrait suffire à assurer une bonne protection contre la corrosion.

Paradoxalement il est connu que les surface métalliques sont en fait toujours porteuses d'un film d'oxyde mais que, sous sa forme naturelle, il n'est guère utilisable pour remplir les fonctions de protection et d'accrochage. En effet, des processus tels que la galvanisation à chaud ou l'oxydation d'origine thermique conduisent à la formation d'oxydes, par exemple de zinc ou d'aluminium, à la surface des bandes d'acier. Cependant, cette protection est faible et en outre ces oxydes sont inertes et ne permettent pas ou permettent moins favorablement l'accrochage ultérieur d'un revêtement organique tel qu'une peinture (voir par exemple Le livre de l'acier, G. BERANGER et al., Ed. Lavoisier Tec & Doc (1996) pp. 700-701). Pour surmonter cette difficulté on peut songer à transformer chimiquement la surface galvanisée, obtenue par dissolution et/ou élimination de ces oxydes inertes, en une surface réactive disponible pour un revêtement ultérieur.

Les oxydes favorables précités (de silicium, etc.) possèdent aussi l'avantage d'être à la fois compatibles avec les métaux et avec les matières organiques entrant dans la composition des peintures. En effet, la Demanderesse a constaté que ces oxydes et les surfaces métalliques à protéger peuvent, dans certaines conditions, se lier chimiquement via un pont oxygène. De même, en passant par la formation de silanes organiques, il est possible d'obtenir des liaisons covalentes, de forte énergie, entre des molécules organiques et des oxydes de ce type. Ceux-ci constituent donc des candidats idéaux afin de permettre une excellente liaison entre le substrat et la peinture.

De plus, la nécessité de trouver de nouveaux procédés de revêtement des aciers galvanisés a mis en valeur des composés chimiques qui avaient été délaissés jusqu'à présent.

Ainsi, les nanoparticules commercialisées pourtant depuis plus de 60 ans ne sont réellement incorporées que depuis une dizaine d'année comme composant principal d'une couche de traitement avant peinture.

Les avantages de l'utilisation des nanoparticules sont multiples. Tout d'abord, elles sont moins réactives que des précurseurs moléculaires comme les silanols, les sels minéraux ou les précurseurs organométalliques et donc permettent d'obtenir des solutions bien plus stables. Ensuite, elles sont suffisamment petites pour permettre la réalisation de revêtements ultra-fins (quelques centaines de nanomètres). En outre, leur utilisation permet la réalisation de revêtements plus ductiles qu'un revêtement dense (par exemple en verre fondu). Enfin, bien que les solutions de ces nanoparticules soient classées comme corrosives ou nocives, elles ne sont ni toxiques, ni dangereuses pour l'environnement comme peuvent l'être les solutions à base de chrome hexavalent.

### Etat de la technique

Des tentatives de dépôt de revêtements ultra-fins, entre autres de nanoparticules de silice, par voie humide ont été menées mais ces essais se sont révélés peu satisfaisants en terme de vitesse de réaction. Les durées de dépôt doivent en effet être courtes du fait que le revêtement doit être réalisé à même les lignes de galvanisation dont la vitesse est typiquement de 2 à 3 mètres/seconde.

Entre autres essais, on peut citer :
- le dépôt d'un mélange ethysilicate/silice (technologie sol-gel) sur aluminium ; ce procédé nécessite un séchage lent, donc de longue durée, pour limiter la formation de fissures lors de l'évaporation du solvant (brevets américains US-A-5 514 211 et US-A-5 879 437 de Alcan Inc.) ;
- le rinçage, également de longue durée, dans une solution de silicate/sel métallique suivi d'un traitement à base de silane, nécessaire vu le manque d'énergie fournie au système. Le procédé a été développé par Armco Steel et a fait l'objet de la demande européenne EP-0 492 306-A2 ;
- la trempe de pièces revêtues dans un mélange à base de silicate minéral ou organique, généralement de silicate de potassium. Cette opération est proposée à une température légèrement supérieure (125°C). De bonnes propriétés de tenue à la corrosion sont annoncées mais l'accrochage de revêtements ultérieurs n'est pas pris en compte et les temps de traitement sont encore longs puisque des temps allant jusqu'à 60 secondes sont rapportés. Cette méthode a été brevetée par Zaclon Corporation (US-A-5 068134) ;
- le traitement d'un acier galvanisé dans une solution contenant principalement de la silice nanométrique, suivi d'un séchage. Des demandes de brevet ont été déposées par NKK Corp. (JP-A-92 96276 ou JP-A-92 96277) ; ici encore le temps de séchage est prohibitif ;
- le traitement d'un acier galvanisé par une solution de particules d'oxyde ou d'un mélange d'oxyde (SiO₂, Sb₂O₃, Al₂O₃, ZrO₂ ou TiO₂) dont la surface adsorbe des ions Ni ou Co. On applique aussi un séchage (demande de brevet JP-A-21 04675 déposée par Sumitomo Metal Ind. Ltd.).
- projection d'une solution de nanoparticules d'oxydes (ZrO2, Cr203, Al2O3, Y2O3, CeO2, ZrBiO4, Sb2O3) sur la surface très chaude (>= 100°C) d'une bande d'acier galvanisée (JP-A-1011983).
- Application d'une dispersion contenant des compositions métalliques sur une bande galvanisée chaude pour former très vite une couche d'épaisseur entre 10 et 300nm. Le PH de la dispersion est réglée entre 2 et 7 (WO-A-0068460).
- Production d'une couche sur une bande d'acier ou sur une bande d'acier galvanisée à partir d'une solution contenant des nanoparticules de SiO2 (US-A-5853850).

Dans chacune des solutions proposées ci-dessus, le fait de travailler à de basses températures implique une vitesse d'agglomération faible des nanoparticules. Le manque d'énergie ne favorise pas non plus la bonne liaison des particules entre elle. Ceci va se ressentir finalement dans la cohésion de la couche qui aura tendance à se montrer friable.

D'autres solutions ont été proposées, en particulier des traitements par électrolyse. Ce type de procédé est efficace car l'énergie thermique est remplacée par de l'électricité :
- le dépôt d'un composé zinc-silice sur tôle d'acier par électrolyse à partir d'une solution contenant de la silice colloïdale, des surfactants et des sels de zinc. La morphologie du revêtement n'est pas la même que celle d'un revêtement de silice pure. Il y a en particulier beaucoup moins de points d'accrochage pour une couche de revêtement organique telle qu'une peinture (brevet américain US-A-4 655 882 de Okayama - Ken) ;
- la réalisation d'une couche d'oxyde de Cr/nanoparticules de silice sur une tôle galvanisée par une électrolyse cathodique. La silice joue ici le rôle de matrice pour le revêtement. Malheureusement, ce procédé nécessite l'utilisation du Cr(VI) (demande de brevet européen EP-0 247 290 de Kawasaki Steel).

### Buts de l'invention

La présente invention vise à fournir un procédé pour recouvrir un métal d'un dépôt d'oxyde protecteur ultra-fin, de préférence de silicium, titane, yttrium ou antimoine.

Un but complémentaire de l'invention est de fournir un procédé alternatif aux procédés recourant à l'utilisation de produits répertoriés comme toxiques, en particulier un procédé n'utilisant pas de chrome(VI).

Un autre but de l'invention est de fournir un procédé à mise en oeuvre très rapide et simple d'utilisation, en particulier pouvant être mis en oeuvre dans le cadre du "coil-coating".

### Principaux éléments caractéristiques de l'invention

L'objet de la présente invention se rapporte à un procédé pour revêtir en continu un substrat en mouvement, comme indiqué selon les termes de la revendication 1.

Selon l'invention, le dépôt est ainsi effectué sur un substrat constitué d'un métal nu, qui est l'acier, l'aluminium, le zinc, ou le cuivre, ou d'un premier métal revêtu d'un second métal, qui est une bande d'acier recouverte d'une couche de zinc, d'aluminium, d'étain ou d'un alliage d'au moins deux de ces métaux.

Les nanoparticules comprennent des oxydes de SiO₂, TiO₂, Al₂O₃, Sb₂O₅, Y₂O₃, ZnO, ou SnO₂, ou des mélanges de ces oxydes, sont hydrophiles et/ou hydrophobes, ont une taille comprise entre 1 et 100 nm et se trouvent dans la solution à une teneur comprise entre 0,1 et 10%, et de préférence entre 0,1 et 1%.

Selon une caractéristique importante de l'invention, le pH de la solution est adapté de façon à permettre la dissolution et/ou l'enlèvement d'oxydes superficiels sur le substrat métallique lors de son contact avec la solution et à conférer aux particules présentes dans la solution une charge électrique suffisante. Ainsi on veut éviter tout agglomérat dans la solution et rendre les particules les plus réactives possibles sans déstabiliser la solution.

De plus, le pH des solutions à base des nanoparticules précitées ou de leurs mélanges est basique et compris entre 9 et 13.

De préférence, le pH des solutions à base de mélange de nanoparticules est adapté pour que la solution soit stable pendant le temps de son utilisation.

De manière encore préférée, dans le cas où le substrat présente une couche superficielle comprenant un composé de zinc, d'aluminium, de fer, d'étain, de chrome, de nickel ou de cuivre, le pH de la solution peut être basique.

Selon une première forme d'exécution préférée de l'invention, le dépôt est réalisé par immersion de durée contrôlée du substrat dans un bac de trempe contenant la solution.

Selon une deuxième forme d'exécution préférée de l'invention, le dépôt est réalisé par projection de la solution sur le substrat au moyen d'un ou plusieurs gicleurs. On entend par gicleur(s) tout système, assisté ou non par gaz comprimé, qui projette des gouttelettes de la solution.

Selon une troisième forme d'exécution préférée de l'invention, le dépôt est réalisé par dépôt de la solution sur le substrat au moyen d'un rouleau.

De préférence, la solution qui vient en contact avec la bande est maintenue à une température inférieure à 50°C et de préférence inférieure à 35°C et la température du substrat au début du dépôt est supérieure à 200°C.

Encore préférentiellement, lorsque le substrat possède déjà un revêtement métallique avant le traitement, la température du substrat au début du dépôt est supérieure à 200°C et inférieure de 30 à 100°C à la température de fusion dudit métal de revêtement.

Selon une caractéristique particulière de l'invention, lorsque le substrat possède un revêtement métallique obtenu par trempage, de préférence par galvanisation au trempé à chaud, le dépôt est effectué juste après le dépôt métallique.

Selon une autre caractéristique de l'invention, dans le cas de substrats possédant déjà un revêtement métallique effectué par trempage, on protège ledit substrat de contacts importants avec l'air.

Avantageusement, le dépôt est limité dans le temps en faisant varier la hauteur d'immersion dans le cas d'un dépôt dans une solution ou la longueur arrosée dans le sens de défilement dans le cas d'une projection de la solution par gicleur(s).

Selon un aspect général de l'invention, le solvant utilisé comprend de l'eau avec éventuellement un co-solvant pouvant disperser les nanoparticules de manière efficace.

Avantageusement, on ajoute à la solution de nanoparticules des agents pour l'amélioration de la résistance à la corrosion et/ou l'adhérence avec le substrat ou la peinture, et/ou pour favoriser le glissement lors du formage.

Après investigation supplémentaire, les inventeurs ont constaté que le substrat revêtu peut être rincé après revêtement au moyen d'eau ou d'une solution à base de silanes organiques ou d'acide carboxylique contenant une fonction susceptible de former ultérieurement une liaison organique forte.

Il est en outre avantageux que le procédé de l'invention comprenne des moyens :
- de mesure et de régulation du pH en continu,
- pour assurer le renouvellement de la solution et l'élimination des produits excédentaires de la réaction,
- pour assurer le mélange homogène du bain, en vue d'éviter des turbulences à sa surface.

Plus spécifiquement, selon la première forme d'exécution préférée, on contrôle la température de la bande et du bain, le temps de séjour de la bande dans le bain, la concentration en nanoparticules dans le bain et le pH du bain.

Plus spécifiquement, selon la deuxième forme d'exécution préférée, on contrôle la température de la bande, le temps d'arrosage, la concentration en nanoparticules dans la solution projetée, le débit de projection et le pH.

Un autre avantage significatif du procédé de revêtement de la présente invention est qu'il ne nécessite aucune opération de séchage supplémentaire après la réalisation proprement dite du revêtement.

### Description détaillée de l'invention

La présente invention a pour objet un procédé de revêtement de surfaces métalliques, de façon à créer une couche superficielle qui en assure à la fois la protection et la possibilité d'accrochage d'un revêtement ultérieur. Le substrat à revêtir d'une couche de protection ultra-fine est soit un métal nu, qui est l'acier, aluminium, zinc, cuivre, soit une bande d'acier revêtu d'une couche d'un autre métal telle qui est une couche de zinc, d'aluminium, d'étain ou d'un alliage de ces métaux.

Selon l'invention, ce traitement se caractérise par l'utilisation de nanoparticules d'oxyde.

Les particules utilisées sont les oxydes suivants : SiO₂, TiO₂, Al₂O₃, Sb₂O₅, Y₂O₃, ZnO, SnO₂. Elles sont soit pures, soit sous forme de mélange, hydrophiles et/ou hydrophobes. La taille des particules est comprise entre 1 et 100nm. Le solvant utilisé est soit l'eau, soit l'alcool, soit encore un mélange eau/alcool. On peut également utiliser un autre solvant pouvant disperser les nanoparticules de manière efficace.

Différentes techniques de dépôts peuvent être utilisées :
- immersion de durée contrôlée dans un bac de trempe ;
- projection d'une solution par spray (vaporisateur, gicleurs), c'est-à-dire propulsion sous l'effet de la pression de la solution ou par un gaz porteur sous pression ;
- dépôt par un rouleau ("roll coater").

L'obtention d'une couche ultra-mince est liée à des durées de dépôt inférieures à 5-10 secondes, et de préférence à deux secondes. En outre, un temps court est requis car la température du substrat baisse durant le dépôt; il est impératif d'appliquer un temps court pour obtenir un séchage de la bande par la chaleur y présente du fait de sa température propre en fin de traitement. Ce type de séchage "naturel" évite en effet les risques d'endommagement du revêtement par un séchage forcé de l'extérieur.

La température du substrat joue un rôle important dans le procédé de l'invention. De préférence, si l'on travaille à une température supérieure à 200°C, on peut profiter de la température de la bande dans le cas d'un revêtement au trempé. Dans ce cas, en effet, la bande est recuite en continu dans un four, immergée dans le bain de métal liquide puis après essorage et solidification du revêtement, elle est encore à haute température. On ne peut cependant pas la refroidir trop rapidement car cela affecterait sa planéité. Selon une caractéristique importante de l'invention, on procédera au dépôt à une température de substrat de l'ordre de la température de solidification du métal de revêtement diminuée d'environ 30 à 100°C.

Selon la présente invention, l'agglomération des nanoparticules sur la bande métallique se fait principalement lors de la première seconde de contact entre la solution précitée et la bande chaude, par exemple dans un bain de trempe. Le temps de séjour dans le bain étant de préférence inférieur à 2 secondes, la chaleur résiduelle de la tôle à la sortie du bain permet un "auto-séchage" rapide de la couche de revêtement formée.

Dans le cas d'un métal non revêtu, on peut dans certains cas profiter de la chaleur du métal emmagasinée par exemple dans un recuit continu des bandes d'acier, un nettoyage à haute température, etc. On peut aussi chauffer le métal à traiter par flamme, par induction, etc.

La température de la solution, quant à elle, va conditionner sa réactivité et sa stabilité, ainsi que la vitesse de refroidissement. Elle sera maintenue avant dépôt à une température inférieure à 50°C et de préférence inférieure à 35°C.

Le pH de la solution au moment du dépôt constitue un aspect crucial car il conditionne l'accrochage du présent traitement sur la surface métallique, qu'elle soit revêtue ou non. La présence d'un oxyde non protecteur tel que Al₂O₃ ou ZnO à la surface du zinc n'est, selon la Demanderesse, pas une bonne chose. En conséquence, son élimination est une priorité. Pour cela, la solution colloïdale de nanoparticules est modifiée avec l'ajout d'un composé basique comme la soude, l'hydroxyde de potassium ou le carbonate d'ammonium. L'augmentation de pH qui en résulte est destinée à permettre la solubilisation de l'oxyde de surface existant par la formation d'un hydroxyde. Le bouillonnement de l'eau à la surface du zinc balaie alors aisément ce composé et rend la surface exempte de tout oxyde préexistant ou non désiré. On vise à charger électriquement au maximum les nanoparticules de la surface à revêtir pour éviter tout agglomérat dans la solution colloïdale et à rendre les particules les plus réactives possibles sans déstabiliser la solution. A cet égard, il convient aussi d'adapter le pH des solutions utilisées.

Dans le cas de substrats possédant déjà un revêtement métallique effectué par trempage, on protège le substrat de contacts importants avec l'air, afin d'éviter la formation d'une couche trop importante d'oxydes inertes. Celle-ci ne pourrait en effet être enlevée en des temps de traitement acceptables en ligne.

Cette augmentation de pH a aussi d'autres avantages. Elle rend la silice plus réactive grâce à une concentration de surface plus importante en silanolate. De plus, d'après certains auteurs, cela permettrait de réaliser des revêtements denses. Les meilleurs résultats en terme d'adhérence et de poudrage du revêtement sont obtenus pour des pH compris entre 9 et 13. Pour des pH inférieurs à 9, la silice est poudreuse et peu adhérente. Pour un pH supérieur à 13, la solution colloïdale devient instable : la silice polymérise et précipite d'elle-même.

L'utilisation de bains alcalins est préconisée lorsqu'on travaille avec des solutions de nanoparticules d'oxydes tels que SiO₂, SnO₂, TiO₂, ZnO, Sb₂O₅.

Cependant, on pourra utiliser des solutions de pH soit basique, soit acide lorsque le substrat comprend un composé de zinc, d'aluminium, de fer, d'étain, de chrome, de nickel ou de cuivre.

Le Tableau I montre l'influence du pH d'une solution colloïdale de nanoparticules de silice sur l'adhérence ultérieure d'une peinture, dans le cas de tôles galvanisées prétraitées à partir de ladite solution colloïdale prise à différentes valeurs de pH.

**Tableau I**

| *Adhérence* | pH 7 | pH 9 | pH 11 | pH 12 |
|---|---|---|---|---|
| quadrillage + tape (*) | - | - | 0 | + |
| pliage 0T + tape (**) | - | 0 | 0 | + |

| | | | | |
|---|---|---|---|---|
| *Légende :* - grande surface de métal dénudé visible 0 faible surface de métal dénudé visible + pas de surface de métal exposée, aucune trace de peinture sur le tape (*) test de griffure par peigne de façon à réaliser un quadrillage sur la peinture suivi d'un test d'adhérence par scotch tape ; (**) test de pliage de la tôle à 180°, le rayon de courbure du pli ne permettant pas l'insertion d'une même tôle dans le pli. Suivi d'un test d'adhérence par scotch tape. | | | | |

En ce qui concerne la chimie du bain de dépôt, d'une part la concentration en particules dans le bain est comprise entre 0,1 et 10%, et de préférence entre 0.1 et 1%. D'autre part, du point de vue de la gestion chimique du bain de traitement, on prévoit des moyens de mesure et de régulation du pH en continu, un renouvellement de la solution, une élimination des produits de réaction et un système de mélange adapté pour éviter les turbulences au niveau de la surface du bain, étant entendu que la surface du bain doit être la plus plane possible.

L'épaisseur du dépôt est typiquement de 20 à 5000nm, de préférence de 50 à 1000nm. Le réglage de l'épaisseur est effectué par exemple par des mesures en ligne ellipsométriques ou des mesures nucléaires. Dans le cas de l'immersion dans un bain, les paramètres de contrôle sont notamment la température de la bande et du bain, le temps de séjour de la bande dans le bain, la concentration en nanoparticules et le pH du bain. Dans le cas de l'aspersion par gicleurs, les paramètres de contrôle sont notamment la température de la bande, le temps d'arrosage, la concentration en nanoparticules dans la solution vaporisée, le débit des sprays, le pH.

Des additifs peuvent être ajoutés aux particules de base :
- soit pour améliorer la résistance à la corrosion (basées sur des composés minéraux, tels que CrX, MoX, etc., ou organiques) ;
- soit pour favoriser le glissement lors du formage (MoS₂, PTFE, etc.).

Après dépôt, il peut être intéressant d'effectuer un rinçage à base d'une solution aqueuse à quelques pour mille en silane organique. Le but en est double : d'abord, obtenir un bon rinçage du surplus de silice et ensuite profiter de l'occasion pour fonctionnaliser la surface de la couche d'oxyde avec des fonctions organiques de type amine, alcool, epoxy ou encore double liaison carbone-carbone (par exemple acrylate). Ceci permet de renforcer la liaison ultérieure silice/substance organique.

### Description d'une forme d'exécution préférée de l'invention

En guise d'exemple d'application de l'invention, on citera ci-après une ligne de revêtement en continu d'une bande d'acier.

Une ligne continue de revêtement au trempé comprend en général les étapes successives suivantes :
- la bande passe en continu dans un four de recuit ;
- elle plonge ensuite dans un bain de métal liquide qui va servir à la revêtir ;
- au sortir du bain, la bande suit un trajet vertical : d'abord, l'excès de métal de revêtement y est enlevé par des essoreurs à gaz et ensuite, ce revêtement se solidifie pendant que la bande monte vers un rouleau supérieur ;
- la bande parcourt enfin un trajet où les opérations suivantes sont appliquées : refroidissement par air, brouillard et/ou trempe à l'eau, laminage d'écrouissage, conversion de surface (chromatage).

La vitesse de ligne est typiquement de l'ordre de 120 m/min (soit 2 m/s). La température de bande est de l'ordre de 460 °C dans le bain. Dans le cas du revêtement galvanisé, la température diminue graduellement pour atteindre 340 - 390 °C au rouleau supérieur ; elle diminue ensuite progressivement. Dans le cas du revêtement dit "galvanneal" (alliage ZnFe), on réchauffe la bande immédiatement après l'essorage jusqu'à 490 - 560 °C puis on la refroidit avant qu'elle n'atteigne le rouleau supérieur.

Dans une telle ligne, le revêtement peut-être appliqué par exemple :
- par spray pendant le trajet vertical de la bande vers le rouleau supérieur ou juste après ce rouleau, la température de la bande à cet endroit étant typiquement comprise entre 200 et 350°C ;
- par immersion dans un bain de solution lors d'un trajet vertical descendant.

Les surfaces traitées sont des métaux ou alliages pouvant être composés de fer (aciers), d'aluminium, de zinc ou de cuivre ainsi que les inox. Il est également très intéressant d'utiliser ce procédé de revêtement pour protéger des surfaces revêtues comme les aciers galvanisés (c'est-à-dire les aciers revêtus avec un alliage à base de zinc ou d'aluminium).

Le procédé de l'invention est applicable à toute pièce métallique de forme particulière (par exemple tubes, profilés, fils, etc.) mais aussi aux bandes métalliques qui seront découpées pour donner des tôles.

La réalisation de cette couche présente l'avantage de protéger le substrat contre une détérioration prématurée causée par des agents agressifs extérieurs (chimiques, thermiques, mécaniques, etc.). Ce revêtement a également comme avantages :
- de limiter la formation de la corrosion ;
- de créer une couche isolante électriquement, notamment à destination de l'application aux tôles utilisées dans la construction électrique et électronique ;
- d'assurer une protection contre les empreintes digitales en cours de fabrication ou en service ;
- d'améliorer la résistance du produit aux griffes et à l'abrasion.

Le revêtement de l'invention a également l'avantage d'apporter une meilleure tenue du métal aux différents traitements qu'il va subir par la suite et notamment :
- d'améliorer l'adhérence de revêtements organiques ajoutés ultérieurement pour protéger ou donner un autre aspect (couleur, brillance, etc.) ;
- d'améliorer la résistance d'assemblages collés ;
- d'améliorer l'aptitude au formage.

Le procédé de l'invention présente aussi l'avantage de pouvoir être réalisé dans une fourchette étroite de temps. Ce temps court est exigé d'une part par la mise en oeuvre sur ligne rapide (et donc avec limitation de la longueur du bain ou de l'arrosage) et d'autre part par le produit lui-même, qui demande que la réaction de formation du revêtement soit rapide. Ce choix de la Demanderesse est délibéré est lié à la constitution et à la structure de la couche formée.

Selon l'invention, le séchage après revêtement étant très rapide, il s'ensuit que l'on peut envoyer directement la bande sur une ligne de "skinpass" (série de rouleaux humides) destinée à modifier les propriétés mécaniques de la bande, sans opération de séchage supplémentaire. A cet égard, l'invention présente l'avantage sur l'état de la technique que, dans le cas d'un bain avec long temps de séjour, la tôle perd sa chaleur dans le bain et l'on doit ajouter une installation de séchage supplémentaire (voir par ex. JP-A-92 96275).

Outre ces exigences, le procédé de l'invention permet de satisfaire aux exigences actuelles en terme de protection de l'environnement (procédés "chrome-free") et de simplification des procédés.

## Revendications

1. Procédé pour revêtir en continu un substrat en mouvement, constitué d'un métal nu ou d'un premier métal revêtu d'un second métal, le métal nu, étant l'acier, l'aluminium, le zinc ou le cuivre et le premier métal revêtu d'un second métal étant une bande d'acier recouverte d'une couche de zinc, d'aluminium, d'étain ou d'un alliage d'au moins deux de ces métaux, ledit revêtement déposé sur le substrat comprenant une couche ultra-fine d'épaisseur comprise entre 20 et 2000nm, et de préférence entre 40 et 500nm, le dépôt étant réalisé sans chromate :
- à partir d'une solution aqueuse d'un ou plusieurs types de nanoparticules d'oxydes, sélectionnés dans le groupe constitué de SiO₂, TiO₂, Al₂O₃, Sb₂O₅, Y₂O₃, ZnO et SnO₂, et possédant une taille comprise entre 1 et 100 nm,
- à une température de substrat supérieure à 200°C, et lorsque le substrat possède déjà un revêtement métallique avant le traitement, sur revêtement solidifié, à une température du substrat inférieure de 30 à 100°C à la température de fusion dudit métal de revêtement.
- la durée du dépôt étant inférieure à 10 secondes, et de préférence inférieure à 2 secondes,
**caractérisé en ce que** le pH de la solution aqueuse est contrôlé et maintenu entre 9 et 13.

2. Procédé selon la revendication 1 ou 2, **caractérisé en ce que** le pH de ladite solution est adapté de façon à permettre la dissolution et/ou l'enlèvement d'oxydes superficiels sur le substrat métallique lors de son contact avec la solution et à conférer aux particules présentes dans la solution une charge électrique suffisante pour éviter tout agglomérat.

3. Procédé selon la revendication 1, 2 ou 3, **caractérisé en ce que** le pH des solutions à base de mélange de nanoparticules est adapté pour que la solution soit stable pendant le temps de son utilisation.

4. Procédé selon l'une quelconque des revendications 1 à 4, **caractérisé en ce que** le dépôt est réalisé par immersion de durée contrôlée du substrat dans un bac de trempe contenant la solution.

5. Procédé selon l'une quelconque des revendications 1 à 4, **caractérisé en ce que** le dépôt est réalisé par projection de la solution sur le substrat au moyen d'un ou plusieurs gicleurs.

6. Procédé selon l'une quelconque des revendications 1 à 4, **caractérisé en ce que** le dépôt est réalisé par dépôt de la solution sur le substrat au moyen d'un rouleau.

7. Procédé selon l'une quelconque des revendication 5 à 7, **caractérisé en ce que** la solution qui vient en contact avec la bande est maintenue à une température inférieure à 50°C et de préférence inférieure à 35°C.

8. Procédé selon la revendication 1 **caractérisé en ce que**, lorsque le substrat possède un revêtement métallique obtenu par trempage, de préférence par galvanisation au trempé à chaud, ledit dépôt est effectué juste après le dépôt du revêtement métallique.

9. Procédé selon la revendication 9 **caractérisé en ce que**, dans le cas de substrats possédant déjà un revêtement métallique effectué par trempage, on protège ledit substrat de contacts importants avec l'air.

10. Procédé selon l'une quelconque des revendications précédentes, **caractérisé en ce que** le dépôt en limité dans le temps en faisant varier la hauteur d'immersion dans le cas d'un dépôt dans une solution ou la longueur arrosée dans le sens de défilement dans le cas d'une projection de la solution par gicleur(s).

11. Procédé selon l'une quelconque des revendications précédentes, **caractérisé en ce que** la solution aqueuse comprend au moins un co-solvant pouvant disperser les nanoparticules de manière efficace.

12. Procédé selon l'une quelconque des revendications précédentes, **caractérisé en ce qu'**on ajoute à la solution de nanoparticules des agents pour l'amélioration de la résistance à la corrosion et/ou l'adhérence avec le substrat ou la peinture et/ou pour favoriser le glissement lors du formage.

13. Procédé selon l'une quelconque des revendications précédentes, **caractérisé en ce que** le substrat revêtu est rincé après revêtement au moyen d'eau ou d'une solution à base de silanes organiques ou d'acide carboxylique contenant une fonction susceptible de former ultérieurement une liaison organique forte.

14. Procédé selon la revendication 5, **caractérisé en ce qu'**il comprend des moyens :
- de mesure et de régulation du pH en continu,
- pour assurer le renouvellement de la solution et l'élimination des produits excédentaires de la réaction,
- pour assurer le mélange homogène du bain, en vue d'éviter des turbulences à sa surface.

15. Procédé selon la revendication 15, **caractérisé en ce qu'**on contrôle la température de la bande et du bain, le temps de séjour de la bande dans le bain, la concentration en nanoparticules dans le bain et le pH du bain.

16. Procédé selon la revendication 6, **caractérisé en ce qu'**on contrôle la température de la bande, le temps d'arrosage, la concentration en nanoparticules dans la solution projetée, le débit de projection et le pH.

17. Procédé selon l'une quelconque des revendications précédentes, **caractérisé en ce qu'**il ne nécessite aucune opération de séchage supplémentaire après la réalisation proprement dite du revêtement.

## Claims

1. Method for the continuous coating of a substrate in motion, consisting of a bare metal or of a first metal coated with a second metal, the bare metal being steel, aluminium, zinc or copper and the first metal coated with a second metal being a steel sheet covered with a layer of zinc, aluminium, tin or an alloy of at least two of these metals, said coating deposited on the substrate comprising an ultrathin layer of a thickness between 20 and 2000nm, and preferably between 40 and 500nm, the deposition being achieved without chromate:
- from an aqueous solution of one or several types of oxide nanoparticles, selected from the group consisting of SiO₂, TiO₂, Al₂O₃, Sb₂O₅, Y₂0₃, ZnO and SnO₂ and having a size between 1 and 100nm,
- at a substrate temperature higher than 200°C, and, when the substrate already has a metal coating before treatment, on solidified coating, at a temperature of the substrate lower by 30 to 100°C than the melting temperature of said coating metal,
- the deposition time being less than 10 seconds, and preferably less than 2 seconds,
**characterised in that** the pH of the aqueous solution is controlled and maintained between 9 and 13.

2. Method as in Claim 1, **characterised in that** the pH of said solution is adjusted so as to allow the surface oxides on the metal substrate to be dissolved and/or removed during its contact with the solution and to give the particles present in the solution an electrical charge sufficient to prevent conglomeration.

3. Method as in Claim 1, or 2, **characterised that** the pH of the solutions based on the mixture of nanoparticles is adjusted so that the solution is stable during its period of use.

4. Method as in any one of Claims 1 to 3, **characterised in that** the deposition is achieved by immersion of the substrate for a controlled period of time in an immersion tank containing the solution.

5. Method as in any one of Claims 1 to 3, **characterised in that** the deposition is achieved by spraying the solution onto the substrate by means of one or several jets.

6. Method as in any one of Claims 1 to 3, **characterised in that** the deposition is achieved by deposition of the solution onto the substrate by means of a roller.

7. Method as in any one of Claims 4 to 6, **characterised in that** the solution that comes into contact with the sheet is maintained at a temperature lower than 50°C and preferably lower than 35°C.

8. Method as in Claim 1, **characterised in that,** when the substrate already has a metal coating obtained by immersion, preferably by galvanised hot dipping, said deposition is achieved just after the deposition of the metal coating.

9. Method as in Claim 8, **characterised in that,** in the case of substrates already having a metal coating obtained by immersion, said substrate is protected from significant contact with the air.

10. Method as in any one of the preceding claims, **characterised in that** the deposition is limited in time by varying the depth of immersion in the case of a deposition in a solution or the length sprayed in the direction of the flow in the case of spraying the solution with jet(s).

11. Method as in any one of the preceding claims, **characterised in that** the aqueous solution comprises at least one co-solvent that can disperse the nanoparticles in an efficient manner.

12. Method as in any one of the preceding claims, **characterised in that** agents are added to the solution of nanoparticles in order to improve the resistance against corrosion and/or the adhesion with the substrate or paint and/or to improve the flow during formation.

13. Method as in any one of the preceding claims, **characterised in that** the coated substrate is rinsed after coating by means of water or of a solution based on organic silanes or carboxylic acid with a function that can subsequently form a strong organic bond.

14. Method as in Claim 4, **characterised in that** it comprises means for:
- continuously measuring and controlling the pH,
- ensuring that the solution is renewed and that excess products of the reaction are removed,
- ensuring the homogeneous mixture of the bath so as to prevent turbulence on its surface.

15. Method as in Claim 14, **characterised in that** the temperature of the sheet and of the bath is controlled, as are the time the sheet stays in the bath, the concentration of nanoparticles in the bath and the pH of the bath.

16. Method as in Claim 5, **characterised in that** the temperature of the sheet is controlled, as are the spraying time, the concentration of nanoparticles in the solution sprayed, the flow rate of the spray and the pH.

17. Method as in any one of the preceding claims, **characterised in that** it does not require any additional drying operation after the production of the coating per se.

## Patentansprüche

1. Verfahren, zur Beschichtung eines in Bewegung befindlichen Substrats, bestehend aus einem blanken Metall oder aus einem ersten Metall, welches mit einem zweiten Metall beschichtet ist, wobei das blanke Metall Stahl, Aluminium, Zink oder Kupfer ist und wobei das erste Metall, welches mit einem zweiten Metall beschichtet ist, ein Stahlband ist, das mit einer Zink-, Aluminium-, Zinnschicht oder einer Legierungsschicht von mindestens zweien dieser Metalle beschichtet ist, wobei die auf das Substrat aufgebrachte Beschichtung eine sehr dünne Schicht mit einer Dicke von 20-2000nm, vorzugsweise von 40-500nm umfasst, und die Beschichtung ohne Chromat durchgeführt wird:
- durch eine wässrige Lösung, die einen oder mehrere Arten von Oxidnanopartikeln enthält, die aus der Gruppe bestehend aus SiO₂, TiO₂, Al₂O₃, Sb₂O₅, Y₂O₃, ZnO und SnO₂ ausgewählt werden und eine Größe zwischen 1 und 100 nm haben,
- bei einer Substrat-Temperatur über 200°C,und wenn das Substrat vor der Behandlung bereits eine Metallbeschichtung auf einer verfestigten Beschichtung besitzt, bei einer Temperatur des Substrates, die um 30 bis 100°C geringer ist als die Schmelztemperatur des besagten Beschichtungsmetalls,
- die Beschichtungsdauer beträgt weniger als 10 Sekunden, vorzugsweise weniger als 2 Sekunden,
**dadurch gekennzeichnet, dass** der pH-Wert der wässrigen Lösung geregelt und zwischen 9 und 13 gehalten wird.

2. Verfahren nach Anspruch 1, **dadurch gekennzeichnet, dass** der pH-Wert der besagten Lösung so angepasst wird, dass die Auflösung und/oder Entfernung von Oxiden, die sich an der Oberfläche des Metallsubstrats befinden, bei dessen Kontakt mit der Lösung ermöglicht wird und den in der Lösung vorhandenen Partikeln eine ausreichende elektrische Ladung ermöglicht wird, um jegliches Agglomerat in der Lösung zu vermeiden.

3. Verfahren nach Anspruch 1 oder 2, **dadurch gekennzeichnet, dass** der pH-Wert der Lösung der Nanopartikelmischung so angepasst wird, dass die Lösung für die Zeit ihrer Verwendung stabil bleibt.

4. Verfahren nach einem der Ansprüche 1 bis 3, **dadurch gekennzeichnet, dass** die Beschichtung durch Eintauchen des Substrats in ein Tauchbecken mit der Lösung für eine bestimmte Zeit erfolgt.

5. Verfahren nach einem der Ansprüche 1 bis 3, **dadurch gekennzeichnet, dass** die Beschichtung durch Aufspritzen der Lösung auf das Substrat durch eine oder mehrere Düsen erfolgt.

6. Verfahren nach einem der Ansprüche 1 bis 3, **dadurch gekennzeichnet, dass** die Beschichtung durch Aufbringen der Lösung auf das Substrat mittels einer Rolle erfolgt.

7. Verfahren nach einem der Ansprüche 4 bis 6, **dadurch gekennzeichnet, dass** die Lösung, die mit dem Band in Kontakt kommt, auf einer Temperatur unter 50°C, und vorzugsweise unter 35°C gehalten wird.

8. Verfahren nach Anspruch 1 **dadurch gekennzeichnet, dass**, wenn das Substrat bereits eine durch ein Tauchverfahren, vorzugsweise durch Feuerverzinken, erhaltene Metallbeschichtung besitzt, die Beschichtung unmittelbar nach der Beschichtung der Metallbeschichtung durchgeführt wird.

9. Verfahren nach Anspruch 8, **dadurch gekennzeichnet, dass** bei Substraten, die bereits eine im Tauchbad hergestellte Metallbeschichtung haben, das besagte Substrat gegen längere Kontakte mit Luft geschützt wird.

10. Verfahren nach einem der vorstehenden Ansprüche, **dadurch gekennzeichnet, dass** der Beschichtungsvorgang zeitlich begrenzt wird, indem die Eintauchtiefe im Falle der Beschichtung in einer Lösung oder die bespritzte Länge in Durchlaufrichtung im Falle des Aufspritzens der Lösung durch Düsen variiert wird.

11. Verfahren nach einem der vorstehenden Ansprüche, **dadurch gekennzeichnet, dass** die Wasserlösung mindestens ein anderes Lösemittel enthält, das die Nanopartikel wirksam verteilen kann.

12. Verfahren nach einem der vorstehenden Ansprüche, **dadurch gekennzeichnet, dass** der Nanopartikellösung Mittel zur Verbesserung der Korrosionsfestigkeit und/oder der Haftung auf dem Substrat oder dem Lack und/oder zur Förderung der Gleitfähigkeit beim Formen zugefügt werden.

13. Verfahren nach einem der vorstehenden Ansprüche, **dadurch gekennzeichnet, dass** das beschichtete Substrat nach der Beschichtung mit Wasser oder einer Lösung auf der Grundlage von organischen Silanen oder Carboxylsäure gespült werden kann, die eine Gruppe enthält, die später eine starke organische Verbindung bilden kann.

14. Verfahren nach Anspruch 4, **dadurch gekennzeichnet, dass** es:
- Mittel zur fortlaufenden Messung und Regelung des pH-Werts,
- Mittel zur Erneuerung der Lösung und zur Entfernung von überschüssigen Reaktionsprodukten,
- Mittel zur homogenen Mischung des Bades zur Vermeidung von Turbulenzen an seiner Oberfläche
umfasst.

15. Verfahren nach Anspruch 14, **dadurch gekennzeichnet, dass** die Temperatur des Bandes und des Bades, die Verweildauer des Bandes im Bad, die Nanopartikelkonzentration im Bad und der pH-Wert des Bades gesteuert werden.

16. Verfahren nach Anspruch 5, **dadurch gekennzeichnet, dass** die Temperatur des Bandes, die Berieselungsdauer, die Nanopartikelkonzentration in der Spritzlösung, die Spritzmenge und der pH-Wert gesteuert werden.

17. Verfahren nach einem der vorstehenden Ansprüche, **dadurch gekennzeichnet, dass** nach der eigentlichen Herstellung der Beschichtung kein weiterer Trocknungsvorgang erforderlich ist.
